(19) Europäisches Patentamt
European Patent Office
Office européen des brevets

(11) EP 4 787 653 A1

(12) **EUROPEAN PATENT APPLICATION**
published in accordance with Art. 153(4) EPC

(43) Date of publication:
05.08.2026 Bulletin 2026/32

(21) Application number: 24871701.9

(22) Date of filing: 29.08.2024

(51) International Patent Classification (IPC):
H02J 3/38 (2026.01)          H01M 8/04694 (2016.01)
H01M 8/04858 (2016.01)      H01M 8/249 (2016.01)
H02J 3/00 (2026.01)

(52) Cooperative Patent Classification (CPC):
H01M 8/04694; H01M 8/04858; H01M 8/249;
H02J 3/00; H02J 3/38; Y02E 60/50

(86) International application number:
PCT/JP2024/030919

(87) International publication number:
WO 2025/069900 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.09.2023 JP 2023169313

(71) Applicant: Panasonic Intellectual Property
Management Co., Ltd.
Kadoma-shi, Osaka 571-0057 (JP)

(72) Inventors:
• TANAKA, Yoshikazu
Kadoma-shi, Osaka 571-0057 (JP)

• KANEKO, Yasushi
Kadoma-shi, Osaka 571-0057 (JP)
• TAGUCHI, Yoshifumi
Kadoma-shi, Osaka 571-0057 (JP)
• FUJII, Tsutomu
Kadoma-shi, Osaka 571-0057 (JP)
• ISE, Takehiko
Kadoma-shi, Osaka 571-0057 (JP)
• ABE, Miki
Kadoma-shi, Osaka 571-0057 (JP)
• YOSHIHARA, Yasumichi
Kadoma-shi, Osaka 571-0057 (JP)

(74) Representative: Grünecker Patent- und
Rechtsanwälte
PartG mbB
Leopoldstraße 4
80802 München (DE)

(54) **POWER GENERATION PLANNING METHOD, POWER GENERATION PLANNING DEVICE, AND POWER GENERATION SYSTEM**

(57) According to the present disclosure, a power generation planning method for use of a fuel cell device including a plurality of fuel cell units includes the step of receiving a planned power generation output value of the fuel cell device, the first determination step of determining, among the plurality of fuel cell units, the number of fuel cell units that generate power and the number of fuel cell units that do not generate power to satisfy the planned power generation output value, and the second determination step of determining the number of the fuel cell units that generate power to satisfy a value obtained by adding the total standby power of the fuel cell units that do not generate power to the planned power generation output value.

FIG. 4

RECEIVE PLANNED POWER GENERATION OUTPUT VALUE OF FUEL CELL DEVICE INCLUDING PLURALITY OF FUEL CELL UNITS — S1

DETERMINE, AMONG PLURALITY OF FUEL CELL UNITS, NUMBER OF FUEL CELL UNITS THAT GENERATE POWER AND NUMBER OF FUEL CELL UNITS THAT DO NOT GENERATE POWER TO SATISFY PLANNED POWER GENERATION OUTPUT VALUE IN S1 — S2

DETERMINE NUMBER OF ABOVE-DESCRIBED FUEL CELL UNITS THAT GENERATE POWER TO SATISFY VALUE OBTAINED BY ADDING TOTAL STANDBY POWER OF ABOVE-DESCRIBED FUEL CELL UNITS THAT DO NOT GENERATE POWER TO PLANNED POWER GENERATION OUTPUT VALUE IN S1 — S3

## Description

Technical Field

The present disclosure relates to a power generation planning method, a power generation planning device, and a power generation system.

Background Art

PTL 1 discloses a grid-connected operation control method for use of a fuel cell power generation device. The grid-connected operation control method is used when the power output of a fuel cell is converted to AC by an inverter, part of the power is consumed by an auxiliary machine in the power generation device, and the remainder is output from a transmission end to another utility grid. The grid-connected operation control method is characterized in that the power consumption of the auxiliary machine is added, as a pre-calculated value, to the planned power output value to be given to a control unit for controlling the inverter, the power detection value detected between the output end of the inverter and a power feeding point for the auxiliary machine is fed back to the control unit, and constant power control is performed to maintain the power output of the inverter constant.

Citation List

Patent Literature

PTL 1: Japanese Patent No. 3588855

Summary of Invention

Technical Problem

The present disclosure provides, as an example, a power generation planning method, a power generation planning device, and a power generation system that can determine a power generation plan of a fuel cell device including a plurality of fuel cell units more appropriately than before.

Solution to Problem

To solve the above-described problem, according to an aspect of the present disclosure, a power generation planning method for use of a fuel cell device including a plurality of fuel cell units includes the step of receiving a planned power generation output value of the fuel cell device, the first determination step of determining, among the plurality of fuel cell units, the number of fuel cell units that generate power and the number of fuel cell units that do not generate power to satisfy the planned power generation output value and the second determination step of determining the number of the fuel cell units that generate power to satisfy a value obtained by adding the total standby power of the fuel cell units that do not generate power to the planned power generation output value.

According to another aspect of the present disclosure, a power generation planning method for use of a fuel cell device including a plurality of fuel cell units includes the step of receiving a planned power generation output value of the fuel cell device, the first determination step of determining the power output of each of the fuel cell units of the fuel cell device to satisfy the planned power generation output value, and the second determination step of determining the power output of each of the fuel cell units of the fuel cell device to satisfy the value obtained by adding the total standby power of the fuel cell units determined to have a power output of 0 to the planned power generation output value.

According to still another aspect of the present disclosure, a power generation planning device for a fuel cell device including a plurality of fuel cell units includes a communicator that receives a planned power generation output value of the fuel cell device and a controller. The controller makes a first determination for determining, among the plurality of fuel cell units, the number of fuel cell units that generate power and the number of fuel cell units that do not generate power to satisfy the planned power generation output value received via the communicator and makes a second determination for determining the number of the fuel cell units that generate power to satisfy a value obtained by adding the total standby power of the fuel cell units that do not generate power to the planned power generation output value.

According to yet still another aspect of the present disclosure, a power generation planning device for a fuel cell device including a plurality of fuel cell units includes a communicator that receives a planned power generation output value of the fuel cell device and a controller. The controller makes a first determination for determining the power output of each of the fuel cell units of the fuel cell device to satisfy the planned power generation output value received via the communicator and makes a second determination for determining the power output of each of the fuel cell units of the fuel cell device to satisfy a value obtained by adding the total standby power of the fuel cell units determined to have a power output of 0 to the planned power generation output value.

According to yet still another aspect of the present disclosure, a power generation system includes a fuel cell device including a plurality of fuel cell units and the power generation planning device described above.

Advantageous Effects of Invention

According to an aspect of the present disclosure, the power generation planning method, power generation planning device, and power generation system have the effect that the power generation plan of a fuel cell device including a plurality of fuel cell units can be determined more appropriately than before.

Brief Description of Drawings

[Fig. 1] Fig. 1 illustrates the reason why the net power output of a fuel cell device differs between AC power output fuel cell devices and DC power output fuel cell devices even when the number of fuel cell units that are generating power is the same as the number of fuel cell units that are on standby in the fuel cell device.
[Fig. 2] Fig. 2 illustrates the reason why the net power output of a fuel cell device differs between AC power output fuel cell devices and DC power output fuel cell devices even when the number of fuel cell units that are generating power is the same as the number of fuel cell units that are on standby in the fuel cell device.
[Fig. 3] Fig. 3 illustrates an example of a power generation system including a power generation planning device according to a first embodiment.
[Fig. 4] Fig. 4 is a flowchart of an example of the operation performed by the power generation planning device (a power generation planning method) according to the first embodiment.
[Fig. 5] Fig. 5 is a flowchart of an example of the operation performed by a power generation planning device (a power generation planning method) according to an example of the first embodiment.
[Fig. 6] Fig. 6 is a flowchart of an example of the operation performed by a power generation planning device (a power generation planning method) according to a second embodiment.
[Fig. 7] Fig. 7 is a flowchart of an example of the operation performed by a power generation planning device (a power generation planning method) according to an example of the second embodiment.
[Fig. 8] Fig. 8 illustrates an example of a power generation system including a power generation planning device according to a third embodiment.

Description of Embodiments

As described above, PTL 1 describes the study of the control method for covering the power consumed by the auxiliary machine of one fuel cell power generation device, but does not describe a control method that takes into account a standby fuel cell power generation device in a power generation system that includes a plurality of the fuel cell power generation devices.

In general, there are two power generation output types for a single fuel cell unit: an AC power output type that uses an internal inverter built into the fuel cell unit and a DC power output type that uses an external inverter outside of the fuel cell unit.

To appropriately operate the auxiliary machine in such a fuel cell unit, a desired amount of electric power is required both when generating power and being on standby (in a non-power generation mode). The auxiliary machine is peripheral equipment in the fuel cell unit and includes electrical equipment, such as a control device and a sensor, and actuators, such as a valve and a pump.

Therefore, an AC power output fuel cell unit provides its generated power to the auxiliary machine in the fuel cell unit while generating power and, thus, performs control that takes into account the consumed power of the auxiliary machine. This is because if the consumed power of the auxiliary machine is covered by the power supplied from an external power source, separate equipment, such as wiring, for providing the power from an external power source to the auxiliary machine is required, resulting in decreased mountability and increased costs.

In contrast, a DC power output fuel cell unit covers the power consumed by the auxiliary machine in the fuel cell unit by using the power supplied from an external power supply and, thus, performs control without taking into account the power consumed by the auxiliary machine. This is because if, like the above-described AC power output fuel cell unit, the power consumed by the auxiliary machine is covered by the power supplied from the power output of the fuel cell unit, an internal inverter for converting the DC power output of the fuel cell unit into AC power output for the auxiliary machine is separately required. In addition, in the configuration in which the AC power output converted via an external inverter is supplied to the auxiliary machine, control of DC power output is required to acquire AC power output while taking into account the power consumed by the auxiliary machine, resulting in more complex power control than in the configuration in which the power is supplied from the external power supply to the auxiliary machine.

The power generation output of a fuel cell device including a plurality of fuel cell units is produced by a combination of the fuel cell units that are generating power and the fuel cell units that are on standby. At this time, from the viewpoint of optimizing the life of each of the fuel cell units of the fuel cell device, the operation while determining whether each of the fuel cell units is operated at its rated power output or is on standby (in a suspended mode) is more desirable than the operation while controlling the power output of the fuel cell units all generating power.

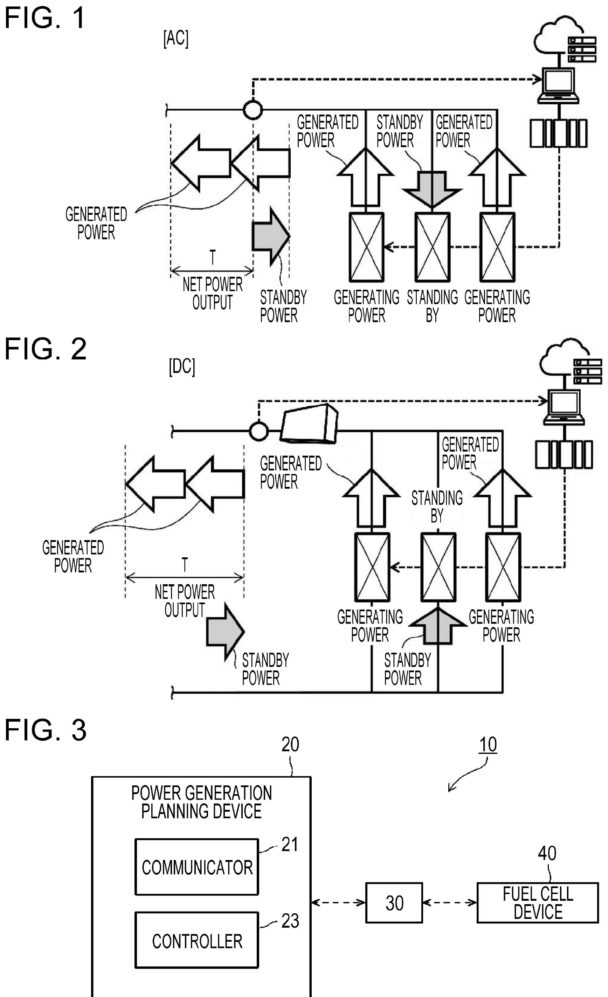

Even if the number of fuel cell units that are generating power is the same as the number of fuel cell units that are on standby in a fuel cell device, the net power output of the fuel cell device differs between AC power output fuel cell devices and DC power output fuel cell devices. For example, as illustrated in Figs. 1 and 2, net power output T of a fuel cell device differs between an AC power output fuel cell device including two fuel cell units that are generating power and one fuel cell unit that is on standby (Fig. 1) and a DC power output fuel cell device including the same fuel cell units as the AC power output fuel cell device (Fig. 2).

Therefore, according to a first aspect of the present disclosure, a power generation planning method for use of a fuel cell device including a plurality of fuel cell units includes the step of receiving a planned power generation output value of the fuel cell device, the first determination step of determining, among the plurality of fuel cell units, the number of fuel cell units that generate power and the number of fuel cell units that do not generate power to satisfy the planned power generation output value of the fuel cell device and the second determination step of determining the number of the fuel cell units that generate power to satisfy a value obtained by adding the total standby power of the fuel cell units that do not generate power to the planned power generation output value of the fuel cell device.

According to the above description, the power generation planning method according to the present aspect can determine the power generation plan of the fuel cell device including a plurality of fuel cell units more appropriately than before.

More specifically, according to the power generation planning method of the present aspect, by performing the second determination step of determining the number of the above-described fuel cell units that generate power to satisfy a value obtained by adding the total standby power of the fuel cell units that do not generate power to the planned power generation output value of the fuel cell device, the probability that the power generation of the fuel cell device including a plurality of fuel cell units cannot be properly planned can be reduced, as compared with the case where the second determination step is not performed.

According to the power generation planning method of a second aspect of the present disclosure, if, in the power generation planning method according to the first aspect, a power output of the plurality of fuel cell units is set to AC power output, the second determination step may be performed that determines the number of the fuel cell units that generate power to satisfy a value obtained by adding the total standby power of the fuel cell units that do not generate power to the planned power generation output value of the fuel cell device. If the power output of the plurality of fuel cell units is set to DC power output, the second determination step need not be performed.

As described above, even if the number of fuel cell units that are generating power is the same as the number of fuel cell units that are on standby in the fuel cell device, the net power output of the fuel cell device differs between AC power output fuel cell devices and DC power output fuel cell devices and, thus, the power generation of the fuel cell device may not be able to properly planned. However, according to the power generation planning method of the present aspect, by determining, based on the difference in power output type of fuel cell unit, whether to perform the second determination step of determining the number of fuel cell units that generate power to satisfy the value obtained by adding the total standby power of the fuel cell units that do not generate power to the planned power generation output value of the fuel cell device, the probability of the above-described issue arising can be reduced as compared with the case where the second determination step is not performed.

According to a third aspect of the present disclosure, a power generation planning method for use of a fuel cell device including a plurality of fuel cell units includes the step of receiving a planned power generation output value of the fuel cell device, the first determination step of determining the power output of each of the fuel cell units of the fuel cell device to satisfy the planned power generation output value of the fuel cell device, and the second determination step of determining the power output of each of the fuel cell units of the fuel cell device to satisfy the value obtained by adding the total standby power of the fuel cell units determined to have a power output of 0 to the planned power generation output value of the fuel cell device.

According to the above description, the power generation planning method of the present aspect can determine the power generation plan of the fuel cell device including a plurality of fuel cell units more appropriately than before.

More specifically, according to the power generation planning method of the present aspect, by performing the second determination step of determining the power output of each of the fuel cell units of the fuel cell device to satisfy the value obtained by adding the total standby power of the fuel cell units determined to have a power output of 0 to the planned power generation output value of the fuel cell device, the probability that the power generation plan of the fuel cell device including a plurality of fuel cell units cannot be properly set up is reduced as compared with the case where the second determination step is not performed.

According to a power generation planning method of a fourth aspect of the present disclosure, in the power generation planning method according to the third aspect, if the power output of the plurality of fuel cell units is set to AC power output, the second determination output step may be performed that determines the power output of each of the fuel cell units of the fuel cell device to satisfy the value obtained by adding the total standby power of the fuel cell units determined to have a power output of 0 to the planned power generation output value of the fuel cell device. If the power output of the plurality of fuel cell units is set to DC power output, the second determination step need not be performed.

As described above, even if the number of fuel cell units that are generating power is the same as the number of fuel cell units that are on standby in the fuel cell device, the net power output of the fuel cell device differs between AC power output fuel cell devices and DC power output fuel cell devices and, thus, the power generation of the fuel cell device may not be able to properly planned. However, according to the power generation planning method of the present aspect, by determining, based on the difference in power output type among the plurality of fuel cell units, whether to perform the second determination step of determining the power output of each of the fuel cell units of the fuel cell device to satisfy the value obtained by adding the total standby power of the fuel cell units determined to have a power output of 0 to the planned power generation output value of the fuel cell device, the probability of the above-described issue arising can be reduced as compared with the case where the second determination step is not performed.

According to a fifth aspect of the present disclosure, a power generation planning device for a fuel cell device including a plurality of fuel cell units includes a communicator that receives a planned power generation output value of the fuel cell device and a controller. The controller makes a first determination for determining, among the plurality of fuel cell units, the number of fuel cell units that generate power and the number of fuel cell units that do not generate power to satisfy the planned power generation output value of the fuel cell device received via the communicator and makes a second determination for determining the number of the fuel cell units that generate power to satisfy a value obtained by adding the total standby power of the fuel cell units that do not generate power to the planned power generation output value of the fuel cell device.

According to such a configuration, the power generation planning device of the present aspect can determine the power generation plan of a fuel cell device including a plurality of fuel cell units more appropriately than before. The details of the operations and effects of the power generation planning device of the present aspect are the same as those of the power generation planning method of the first aspect and, therefore, description of the details of the operations and effects is omitted.

According to a sixth aspect of the present disclosure, a power generation planning device for a fuel cell device including a plurality of fuel cell units includes a communicator that receives a planned power generation output value of the fuel cell device and a controller. The controller makes a first determination for determining the power output of each of the fuel cell units of the fuel cell device to satisfy the planned power generation output value received via the communicator and makes a second determination for determining the power output of each of the fuel cell units of the fuel cell device to satisfy a value obtained by adding the total standby power of the fuel cell units determined to have a power output of 0 to the planned power generation output value.

According to such a configuration, the power generation planning device of the present aspect can determine the power generation plan of a fuel cell device including a plurality of fuel cell units more appropriately than before. The details of the operations and effects of the power generation planning device of the present aspect are the same as those of the power generation planning method of the third aspect and, therefore, description of the details of the operations and effects is omitted.

According to a seventh aspect of the present disclosure, a power generation system includes a fuel cell device including a plurality of fuel cell units and the power generation planning device according to the fifth aspect or sixth aspect.

According to such a configuration, the power generation system according to the present aspect can determine the power generation plan of a fuel cell device including a plurality of fuel cell units more appropriately than before. The details of the operations and effects of the power generation system according to the present aspect are the same as those of the power generation planning method according to the first aspect or third aspect and, therefore, description of the details of the operations and effects is omitted.

Particular examples according to the above-described aspects of the present disclosure are described below with reference to the accompanying drawings. The particular examples described below are all examples according to the above-described aspects of the present disclosure. Therefore, a shape, a value, a constituent element, the positions and the connection form of the constituent elements, and the like described below shall not be construed as limiting the scope of the claims, unless otherwise stated in the claims.

In addition, among the constituent elements described below, the constituent element that does not appear in an independent claim, which has the broadest scope of the present disclosure, is described as an optional constituent element. In addition, in the drawings, those identified by the same reference numeral may be omitted from the description.

For ease of understanding of the drawings, the constituent elements are schematically illustrated and may not be exact representations in terms of shape and dimensional ratio.

Furthermore, in the operation performed by a device, the order of the processes may be rearranged as necessary, or a well known process may be added.

(First Embodiment)

[Device Configuration]

Fig. 3 illustrates an example of a power generation system including a power generation planning device according to the first embodiment.

As illustrated in Fig. 3, a power generation system 10 includes a fuel cell device 40, a control device 30, and a power generation planning device 20 for the fuel cell device 40.

The fuel cell device 40 includes a plurality of fuel cell units, and the control device 30 controls the operation performed by the fuel cell device 40. Thus, the power generation system 10 can build, for example, a system that supplies a large amount of power to a utility grid. In this case, the power generation system 10 may include a fuel cell unit group including a plurality of fuel cell units, and the fuel cell device 40 may include a plurality of fuel cell devices obtained by dividing the fuel cell unit group. The control device 30 may be provided in a plurality so that each of the plurality of control devices correspond to one of the plurality of fuel cell devices. The detailed configuration of the above-described power generation system 10 is described in a third embodiment.

In the example illustrated in Fig. 3, the power generation planning device 20 includes a communicator 21 and a controller 23.

The communicator 21 is a receiver that receives a planned power generation output value of the fuel cell device 40. For example, the communicator 21 may receive the above-described planned power generation output value transmitted from a terminal or a server via a communication network at unit intervals.

An example of "unit interval" described above is about 30 minutes, but is not limited thereto. The "unit interval" can be appropriately determined based on, for example, the configuration of the power generation system 10.

The users of the above-described terminals or servers include direct or indirect users of the power generation planning device 20. An example of a direct user of the power generation planning device 20 is the administrator of the power generation planning device 20. An example of an indirect user of the power generation planning device 20 is the owner of the power generation system 10. Such an owner may be a consumer that receives the service of supplying power generated by the power generation system 10 or may be a power producer that supplies power to a consumer by using the power generation system 10.

The controller 23 makes a first determination of the number of fuel cell units that generate power to satisfy the planned power generation output value of the fuel cell device 40 that is received via the communicator 21 and the number of the fuel cell units that do not generate power among the plurality of the fuel cell units. In addition, the controller 23 makes a second determination of the number of fuel cell units that generate power to satisfy a value obtained by adding the total standby power of the above-described fuel cell units that do not generate power to the planned power generation output value of the fuel cell device 40.

Any controller having a control function can be used as the controller 23. The controller 23 includes an arithmetic processing unit (not illustrated) and a storage unit that stores a control program. The arithmetic processing unit reads and executes the control program stored in the storage unit and, thus, performs predetermined control in the controller 23. For example, a microprocessor is used as the arithmetic processing unit. For example, a memory is used as the storage unit.

[Operation]

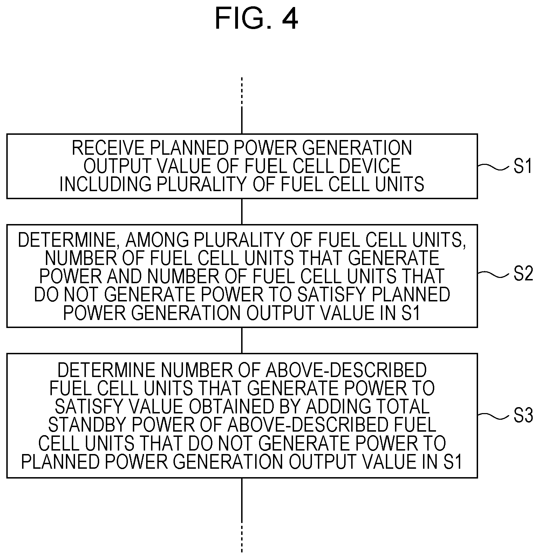

Fig. 4 is a flowchart of an example of the operations performed by the power generation planning device (the power generation planning method) according to the first embodiment. The operations described below may be performed by, for example, the arithmetic processing unit of the controller 23 that reads the control program from the storage unit of the controller 23. However, the operations described below are not necessarily performed by the controller 23. Some of the operations can be performed by an operator. In the example described below, control of the operations is performed by the controller 23.

When the operation performed by the power generation planning device 20 starts, the planned power generation output value of the fuel cell device 40 including a plurality of fuel cell units is first received via the communicator 21 in step S1. For example, the above-described planned power generation output value transmitted from a terminal or a server may be received via the communication network at unit intervals.

In step S2, the number of fuel cell units that generate power and the number of fuel cell units that do not generate power are determined among the plurality of fuel cell units to satisfy the planned power generation output value in step S1.

Thus, the number of fuel cell units is tentatively (temporarily) determined. Step S2 corresponds to a "first determination step" of the present disclosure.

For example, if the planned power generation output value in step S1 is an integer multiple of the rated power output of the fuel cell unit, the "number N1 of fuel cell units that generate power" in step S2 is calculated using the following equation (1), and the "number N2 of fuel cell units that do not generate power" in step S2 is calculated using the following equation (2):

$$N1 = \text{planned power generation output value in step S1/rated power output of fuel cell units} \qquad (1),$$

and

$$N2 = \text{total number of fuel cell units - N1} \ ... \ (2).$$

If the planned power generation output value in step S1 is not an integer multiple of the rated power output of the fuel cell unit, the "number N1 of fuel cell units that generate power" and the "number N2 of fuel cell units that do not generate power" in step S2 may be calculated as described below.

First, when the power output of the fuel cell unit can vary from 0 to the rated power output, the sum (NA + 1) of a number NA representing the "quotient" obtained by dividing the planned power generation output value in step S1 by the rated power output of the fuel cell unit and the number of the fuel cell units (in this case, 1) each operated at a desired power output less than the rated power output corresponds to the "number N1 of fuel cell units that generate power" in step S2. The "total number of fuel cell units - (NA + 1)" corresponds to the "number N2 of fuel cell units that do not generate power" in step S2.

Subsequently, if a lower limit is set for the power output of the fuel cell unit, then the "number N1 of fuel cell units that generate power" in step S2 is determined based on which is greater: the difference between the planned power generation output value in step S1 and the power output equivalent to an appropriate integer multiple of the rated power output of the fuel cell unit or the lower limit.

For example, in the case where the rated power output of the fuel cell units is 5 kW and the lower limit is 2 kW, if the planned power generation output value in step S1 is 31 kW, a combination of six fuel cell units each operating at its rated power output (5 kW) and one fuel cell unit operating at 1 kW (31 kW = 5 kW × 6 + 1 kW × 1) cannot be made. Therefore, the "number N1 of fuel cell units that generate power" in step S2 need to be made by, for example, a combination of five fuel cell units each operating at its rated power output (5 kW) and two fuel cell units each operating at 3 kW (31 kW = 5 kW × 5 + 3 kW × 2) or a combination of five fuel cell units each operating at rated power output (5 kW), one fuel cell unit operating at 4 kW, and one fuel cell unit operating at 2 kW (31 kW = 5 kW × 5 + 4 kW × 1 + 2 kW × 1). However, in this case, the power output of each of the two fuel cell units that are operated at less than its rated power output may be any power output other than the above-described power output, as long as the power output is greater than or equal to 2 kW.

Subsequently, in step S3, the number of the above-described fuel cell units that generate power is determined to satisfy a value obtained by adding the total standby power of the above-described fuel cell units that do not generate power to the planned power generation output value in step S1. Thus, the number of fuel cell units is finally determined. Step S3 corresponds to a "second determination step" of the present disclosure. The information regarding the "number of fuel cell units that generate power" determined in step S3 is transmitted from the power generation planning device 20 to the control device 30 in a timely manner. If the plurality of fuel cell units that generate power include a fuel cell unit that does not operate at its rated power output, information regarding the power output of the fuel cell unit that does not operate at its rated power output may also be transmitted from the power generation planning device 20 to the control device 30.

For example, a "total standby power W1 of the fuel cell units that do not generate power" in step S3 is calculated using the following equation (3):

$$W1 = N2 \times (\text{standby power of fuel cell unit}) \ ... \ (3).$$

If the "planned power generation output value in step S1 + W1" is an integer multiple of the rated power output of the fuel cell unit, the "number N3 of fuel cell units that generate power" in step S3 is calculated using the following equation (4):

$$N3 = (\text{planned power generation output value in step S1 + W1})/\text{rated power output of fuel cell unit} \qquad (4).$$

If the "planned power generation output value in step S1 + W1" is not an integer multiple of the rated power output of the fuel cell unit, a method for calculating the "number N3 of fuel cell units that generate power" in step S3 can be easily understood from the above-described method for calculating the "number N1 of fuel cell units that generate power" in step S2. For this reason, the description of the method is omitted.

After the above-described operation performed by the power generation planning device 20 is completed, the fuel cell device 40 generates power in a timely manner.

According to the present embodiment described above, the power generation plan of the fuel cell device 40 including a plurality of fuel cell units can be determined more appropriately than before.

More specifically, according to the present embodiment, by performing step S3 for determining the number of the above-described fuel cell units that generate power to satisfy the value obtained by adding the total standby power of the above-described fuel cell units that do not generate power to the planned power generation output value of fuel cell device 40, the probability that the power generation plan of the fuel cell device 40 including a plurality of fuel cell units cannot be properly set up is reduced as compared with the case where step S3 is not performed.

(Example of First Embodiment)

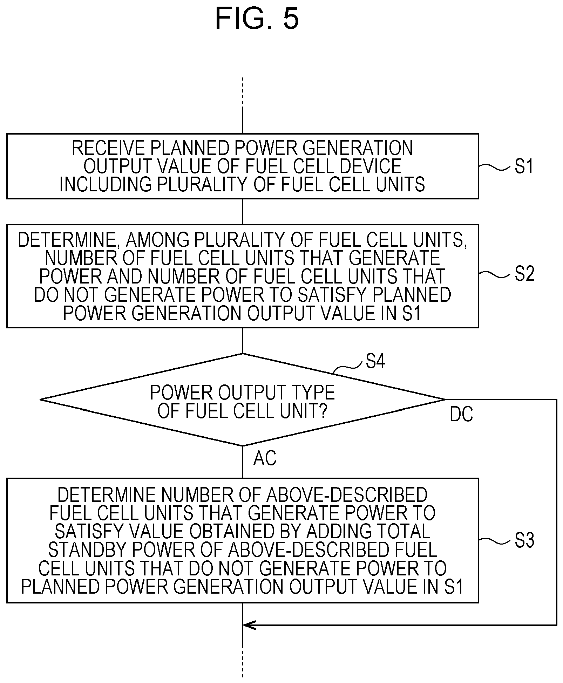

Fig. 5 is a flowchart of an example of the operation (the power generation planning method) performed by the power generation planning device according to the first embodiment. The operations described below may be performed by, for example, the arithmetic processing unit of the controller 23 that reads the control program from the storage unit of the controller 23. However, the operations described below are not necessarily performed by the controller 23. Some of the operations can be performed by an operator. In the example described below, control of the operations is performed by the controller 23.

Here, step S1, step S2, and step S3 in Fig. 5 are the same as step S1, step S2, and step S3 in Fig. 4, respectively, and thus, detailed description of the steps is not repeated.

After the operation in step S2 is performed, it is determined in step S4 whether the power output of the plurality of fuel cell units is set to AC power output or DC power output.

If the power output of the plurality of fuel cell units is set to AC power output ("AC" in step S4), the operation in step S3 is performed. In this case, the number of fuel cell units is finally determined through the operation in step S3.

However, if the power output of the plurality of fuel cell units is set to DC power output ("DC" in step S4), the operation in step S3 is not performed. In this case, information regarding the "number of fuel cell units that generate power" determined in step S2 is transmitted from the power generation planning device 20 to the control device 30 in a timely manner. If the plurality of fuel cell units that generate power include fuel cell units that do not operate at the rated power output, information regarding the power output of the fuel cell units that do not operate at the rated power output may also be transmitted from the power generation planning device 20 to the control device 30.

After the above-described operation performed by the power generation planning device 20 is completed, the fuel cell device 40 generates power in a timely manner.

According to the present example described above, as illustrated in Figs. 1 and 2, even if the number of fuel cell units that are generating power is the same as the number of fuel cell units that are on standby in the fuel cell device 40, the power generation of the fuel cell device 40 may not be able to properly planned because the net power output T of the fuel cell device 40 differs between AC power output fuel cell devices and DC power output fuel cell devices. However, according to the present example, the probability of the above-described issue arising can be reduced by determining, based on the difference in the power output type of the fuel cell unit, whether step S3 can be performed, as compared with the case where it is not determined whether step S3 can be performed. Step S3 determines the above-described number of the fuel cell units that generate power to satisfy the value obtained by adding the total standby power of the fuel cell units that do not generate power to the planned power generation output value in step S1.

The power generation planning method, the power generation planning device 20, and the power generation system 10 according to the present example may be the same as those according to the first embodiment, except for the features described above.

The present example is described as an example on the assumption that there can be two cases of the power output set for the plurality of fuel cell units in the fuel cell device: AC power output and DC power output.

However, if the power output of a plurality of fuel cell units in the fuel cell device are set to AC power output and the power output of a plurality of fuel cell units are never set to DC power output in a fuel cell device, step S3 is performed without performing step S4 after step S2 is performed.

(Second Embodiment)

A power generation planning method according to the second embodiment is similar to the power generation planning method according to the first embodiment, except for the details of control performed by a controller 23 (described below).

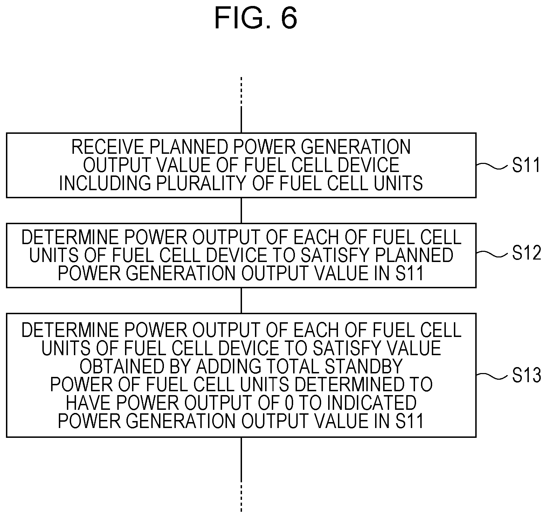

Fig. 6 is a flowchart of an example of the operation performed by a power generation planning device (a power generation planning method) according to the second embodiment. The operations described below may be performed by, for example, the arithmetic processing unit of the controller 23 that reads the control program from the storage unit of the controller 23. However, the operations described below are not necessarily performed by the controller 23. Some of the operations can be performed by an operator. In the example described below, control of the operations is performed by the controller 23.

First, when the operation performed by the power generation planning device 20 starts, the planned power generation output value of the fuel cell device 40 including a plurality of fuel cell units is received via the communicator 21 in step S11. For example, the above-described planned power generation output value transmitted from a terminal or a server via the communication network may be received at unit intervals.

Subsequently, in step S12, the power output of each of the fuel cell units of the fuel cell device 40 is determined to satisfy the planned power generation output value in step S11. Thus, the power output of each of the fuel cell units is tentatively (temporarily) determined. Step S12 corresponds to a "first determination step" of the present disclosure.

For example, if there exists only a "quotient" when the planned power generation output value in step S11 is divided by the rated power output of the fuel cell unit, the power output of each of the fuel cell units equal in number to the "quotient" is determined to be the rated power output. The power output of each of the other fuel cell units is determined to be 0.

If there exist a "quotient" and a "remainder" when the planned power generation output value in step S11 is divided by the rated power output of the fuel cell unit, the "power output of each of the fuel cell units" in step S12 may be calculated in a manner described below.

First, when the power output of a fuel cell unit can vary from 0 to the rated power output, the power output of the fuel cell units equal in number to the "quotient" is determined to be the rated power output, and the power output of one fuel cell unit is determined to be "the planned power generation output value in step S11 - the quotient value × the rated power output of the fuel cell unit". The power output of each of the other fuel cell units is determined to be 0.

If a lower limit is set for the power output of the fuel cell unit, the "power output of each of the fuel cell units" in step S12 is determined based on which is greater: the difference between the planned power generation output value in step S11 and an appropriate integer multiple of the rated power output of the fuel cell unit or the lower limit.

For example, in the case where the rated power output of a fuel cell unit is 5 kW and the lower limit is 2 kW, if the planned power generation output value in step S11 is 31 kW, a combination of fuel cell units each operating at its rated power output (5 kW) and a fuel cell unit operating at 1 kW (31 kW = 5 kW × 6 + 1 kW × 1) cannot be made. Therefore, the "power output of each of the fuel cell units" in step S12 need to be made by, for example, a combination of the fuel cell units each operating at its rated power output (5 kW) and the fuel cell units each operating at 3 kW (31 kW = 5 kW × 5 + 3 kW × 2) or a combination of the fuel cell units each operating at its rated power output (5 kW), the fuel cell unit operating at 4 kW, and the fuel cell unit operating at 2 kW (31 kW = 5 kW × 5 + 4 kW × 1 + 2 kW × 1). However, in this case, the power output of each of the two fuel cell units operating at less than its rated power output may be any power output other than the above-described power output, as long as the power output is greater than or equal to 2 kW.

Subsequently, in step S13, the power output of each of the fuel cell units of the fuel cell device 40 is determined so as to satisfy a value obtained by adding the total standby power of the fuel cell units determined to have a power output of 0 to the planned power generation output value in step S11. Thus, the power output of each of the fuel cell units is finally determined. Step S13 corresponds to a "second determination step" of the present disclosure. The information regarding the "power output of each of the fuel cell units that generate power" determined in step S13 is transmitted from the power generation planning device 20 to the control device 30 in a timely manner.

For example, if there exists only a "quotient" when the value obtained by adding the planned power generation output value in step S11 to the total standby power of the fuel cell units determined to have a power output of 0 is divided by the rated power output of the fuel cell unit, the power output of each of the fuel cell units equal in number to the "quotient" is determined to be the rated power output. The power output of each of the other fuel cell units is determined to be 0.

If there exist a "quotient" and a "remainder" when the value obtained by adding the planned power generation output value in step S11 to the total standby power of the fuel cell units determined to have a power output of 0 is divided by the rated power output of the fuel cell unit, a method for calculating the "power output of each of the fuel cell units" in step S13 can be easily understood from the above-described method for calculating the "power output of each of the fuel cell units" in step S12. For this reason, the description of the method is omitted.

After the above-described operation performed by the power generation planning device 20 is completed, the fuel cell device 40 generates power in a timely manner.

According to the present embodiment described above, the power generation plan of the fuel cell device 40 including a plurality of fuel cell units can be determined more appropriately than before.

More specifically, according to the present embodiment, by performing step S13 for determining the power output of each of the fuel cell units of the fuel cell device 40 so as to satisfy the value obtained by adding the total standby power of the fuel cell units determined to have a power output of 0 to the planned power generation output value of the fuel cell device 40, the probability that the power generation plan of the fuel cell device 40 including a plurality of fuel cell units cannot be properly set up is reduced as compared with the case where step S13 is not performed.

The power generation planning method, the power generation planning device 20, and the power generation system 10 according to the present embodiment may be the same as those according to the first embodiment or the example of the first embodiment, except for the features described above.

(Example of Second Embodiment)

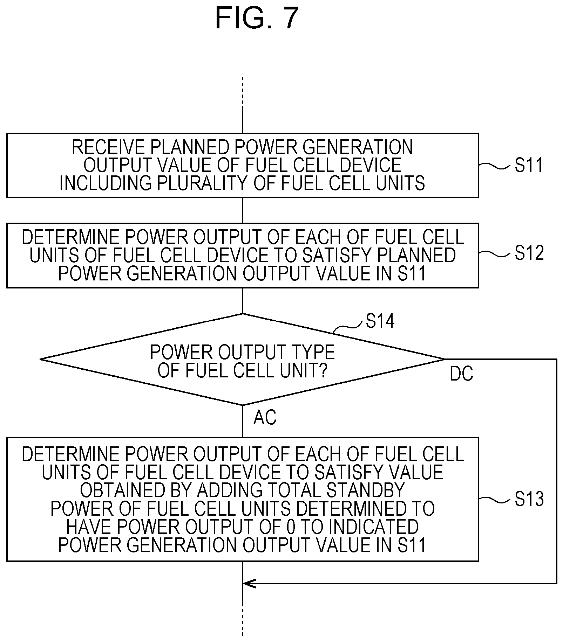

Fig. 7 is a flowchart of an example of the operation performed by a power generation planning device (a power generation planning method) according to the example of the second embodiment. The operations described below may be performed by, for example, the arithmetic processing unit of the controller 23 that reads the control program from the storage unit of the controller 23. However, the operations described below are not necessarily performed by the controller 23. Some of the operations can be performed by an operator. In the example described below, control of the operations is performed by the controller 23.

Here, step S11, step S12, and step S13 in Fig. 7 are the same as step S11, step S12, and step S13 in Fig. 6, respectively, and thus, detailed description of the steps is not repeated.

After the operation in step S12 is performed, it is determined in step S14 whether the power output of the plurality of fuel cell units is set to AC power output or DC power output.

If the power output of the plurality of fuel cell units is set to AC power output ("AC" in step S14), the operation in step S13 is performed. In this case, the power output of each of the fuel cell units is finally determined through the operation in step S13.

However, if the power output of the plurality of fuel cell units is set to DC power output ("DC" in step S14), the operation in step S13 is not performed. In this case, information regarding the "power output of the fuel cell units that generate power" determined in step 12 is transmitted from the power generation planning device 20 to the control device 30 in a timely manner.

After the above-described operation performed by the power generation planning device 20 is completed, the fuel cell device 40 generates power in a timely manner.

According to the present example described above, as illustrated in Figs. 1 and 2, even if the number of fuel cell units that are generating power is the same as the number of fuel cell units that are on standby in the fuel cell device 40, the power generation of the fuel cell device 40 may not be able to properly planned because the net power output of the fuel cell device 40 differs between AC power output fuel cell devices and DC power output fuel cell devices. However, according to the present example, the probability of the above-described issue arising can be reduced by determining, based on the difference in power output type of fuel cell unit, whether step S13 can be performed, as compared with not determining whether step S13 can be performed. Step S13 determines the power output of each of the fuel cell units of the fuel cell device 40 so as to satisfy the value obtained by adding the total standby power of the fuel cell units determined to have a power output of 0 to the planned power generation output value in step S11.

The power generation planning method, the power generation planning device 20, and the power generation system 10 according to the present example may be the same as those according to any one of the first embodiment, the example of the first embodiment, and the second embodiment, except for the features described above.

The present example is described as an example on the assumption that there can be two cases of the power output set for the plurality of fuel cell units in the fuel cell device: AC power output and DC power output.

However, if the power output of a plurality of fuel cell units in the fuel cell device are set to AC power output and the power output of a plurality of fuel cell units are never set to DC power output, step S3 is performed without performing step S4 after step S2 is performed.

(Third Embodiment)

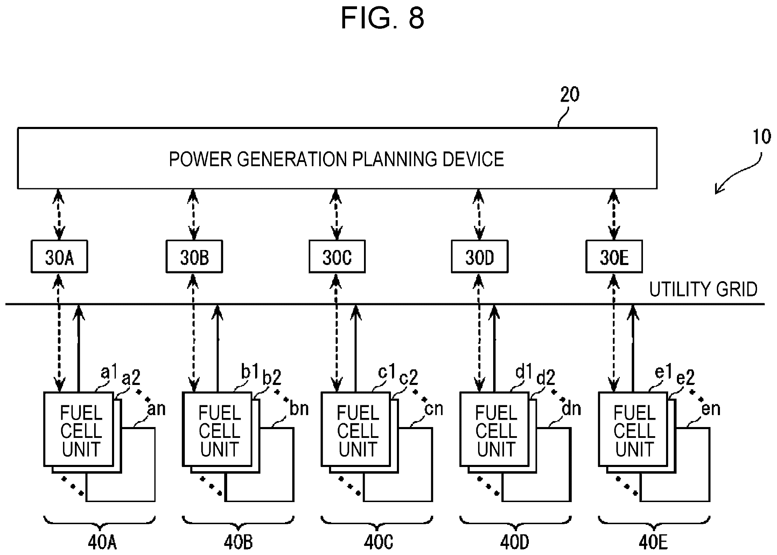

Fig. 8 illustrates an example of a power generation system including a power generation planning device according to the third embodiment.

As illustrated in Fig. 8, a power generation system 10 includes the power generation planning device 20 (refer to Fig. 3), control devices 30A to 30E, and fuel cell devices 40A to 40E. The configuration inside of the power generation planning device 20 is the same as that according to the first embodiment and, thus, detailed description of the configuration is not repeated.

The fuel cell devices 40A to 40E correspond to the fuel cell device 40 in Fig. 3. That is, in the example illustrated in Fig. 8, the power generation system 10 includes a fuel cell unit group consisting of a plurality of fuel cell units. The fuel cell unit group is divided by an appropriate rule, and a plurality of the fuel cell units form a group. Although not illustrated, each of the fuel cell units includes a fuel cell stack, an AC to DC converter device for converting DC power generated by the fuel cell stack into AC power and outputting the AC power to a utility grid, and a control device for controlling the operation performed by the equipment.

In the example, the fuel cell unit group is grouped into fuel cell units a1 to an belonging to the fuel cell device 40A, fuel cell units b1 to bn belonging to the fuel cell device 40B, fuel cell units c1 to cn belonging to the fuel cell device 40C, fuel cell units d1 to dn belonging to the fuel cell device 40D, and fuel cell units e1 to en belonging to the fuel cell device 40E. All the fuel cell units belonging to one fuel cell device are also referred to simply as "all fuel cell units of a fuel cell device".

However, the above-described configuration of the fuel cell unit group is only an example and is not limited thereto. For example, the fuel cell unit group may be grouped by a plurality of fuel cell units in a single group.

The control devices 30A to 30E correspond to the control device 30 in Fig. 3. That is, in the example illustrated in Fig. 8, the control devices 30A to 30E are provided for the fuel cell units a1 to an of the fuel cell device 40A, the fuel cell units b1 to bn of the fuel cell device 40B, the fuel cell units c1 to cn of the fuel cell device 40C, the fuel cell units d1 to dn of the fuel cell device 40D, and the fuel cell units e1 to en of the fuel cell device 40E, respectively, and each of the control devices 30A to 30E controls the operations performed by all fuel cell units of one of the fuel cell devices.

For example, the control device 30A controls the power output of each of the fuel cell units a1 to an via a communication network so that the fuel cell units a1 to an belonging to the fuel cell device 40A can operate efficiently (for example, the lifetimes are optimized). The operation performed by the fuel cell unit belonging to each of the fuel cell devices may be directly controlled by one of the control devices 30A to 30E, without a control device being provided in the fuel cell unit.

Any control device having a control function can be used as each of the control devices 30A to 30E. Each of the control devices 30A to 30E includes an arithmetic processing unit (not illustrated), a storage unit that stores a control program, and a communicator. The arithmetic processing unit reads and executes the control program stored in the storage unit and, thus, performs predetermined control in each of the control devices 30A to 30E. For example, a microprocessor is used as the arithmetic processing unit. For example, a memory is used as the storage unit.

In the example, the power generation planning device 20 gives, to the control devices 30A to 30E, an instruction about various kinds of information such as a power generation plans including the planned power generation output value for the fuel cell devices 40A to 40E, respectively, via the communication network in response to a user's power output request, for example.

The above-described configuration of the power generation system 10 is only an example and is not limited thereto.

For example, the fuel cell unit need not include a control device, and the operations performed by the fuel cell units belonging to each of groups may be directly controlled by one of the control devices 30A to 30E.

The controller 23 (refer to Fig. 3) of the power generation planning device 20 makes a first determination to determine, among a plurality of fuel cell units, the number of fuel cell units that generate power and the number of fuel cell units that do not generate power to satisfy the planned power generation output value of the fuel cell device 40 and makes a second determination to determine the number of fuel cell units that generate power to satisfy a value obtained by adding the total standby power of the fuel cell units that do not generate power to the planned power generation output value of the fuel cell device 40. However, the configuration is not limited thereto. A control device other than the controller 23 (for example, the control devices 30A to 30E) may make the determination.

Furthermore, the power generation planning device 20 may be integrated with the control devices 30A to 30E, that is, may have the control functions of the control devices 30A to 30E and directly control the operations performed by all of the fuel cell units of the fuel cell device 40.

The operations and effects of the power generation planning method, the power generation planning device 20, and the power generation system 10 according to the present embodiment are the same as those described in any one of the first embodiment, the example of the first embodiment, the second embodiment, and the examples of the second embodiment and, thus, description of the operations and effects is not repeated.

The power generation planning method, the power generation planning device 20 and the power generation system 10 according to the present embodiment may be similar to those according to any one of the first embodiment, the example of the first embodiment, the second embodiment, and the example of the second embodiment, except for the features described above.

The first embodiment, the example of the first embodiment, the second embodiment, the example of the second embodiment, and the third embodiment may be combined with one another as long as they do not exclude each other. From the above description, it will be appreciated by those skilled in the art that many improvements and other embodiments of the present disclosure could be made. Accordingly, the above description should be construed as an example only and is for the purpose of teaching those skilled in the art how best to practice the present disclosure. The details of the configuration and/or function can be substantially changed without departing from the spirit of the present disclosure.

Industrial Applicability

One aspect of the present disclosure can be applied to a power generation planning method, a power generation planning device, and a power generation system that can determine a power generation plan for a fuel cell device including a plurality of fuel cell units more appropriately than before.

Reference Signs List

10 power generation system
20 power generation planning device
21 communicator
23 controller
30A control device
30B control device
30C control device
30D control device
30E control device
40 fuel cell device
40A fuel cell device
40B fuel cell device
40C fuel cell device
40D fuel cell device
40E fuel cell device
a1 to an fuel cell unit
b 1 to bn fuel cell unit
c1 to cn fuel cell unit
d1 to dn fuel cell unit
e1 to en fuel cell unit

**Claims**

1.  A power generation planning method for use of a fuel cell device including a plurality of fuel cell units, comprising:

    the step of receiving a planned power generation output value of the fuel cell device;
    the first determination step of determining, among the plurality of fuel cell units, the number of fuel cell units that generate power and the number of fuel cell units that do not generate power to satisfy the planned power generation output value; and
    the second determination step of determining the number of the fuel cell units that generate power to satisfy a value obtained by adding the total standby power of the fuel cell units that do not generate power to the planned power generation output value.

2.  The power generation planning method according to claim 1, wherein if a power output of the plurality of fuel cell units is set to AC power output, the second determination step is performed and, if the power output of the plurality of fuel cell units is set to DC power output, the second determination step is not performed.

3.  A power generation planning method for use of a fuel cell device including a plurality of fuel cell units, comprising:

    the step of receiving a planned power generation output value of the fuel cell device;
    the first determination step of determining the power output of each of the fuel cell units of the fuel cell device to satisfy the planned power generation output value; and
    the second determination step of determining the power output of each of the fuel cell units of the fuel cell device to satisfy a value obtained by adding the total standby power of the fuel cell units determined to have a power output of 0 to the planned power generation output value.

4.  The power generation planning method according to claim 3, wherein if a power output of the plurality of fuel cell units is set to AC power output, the second determination output step is performed and, if the power output of the plurality of fuel cell units is set to DC power output, the second determination step is not performed.

5.  A power generation planning device for a fuel cell device including a plurality of fuel cell units, comprising:

    a communicator that receives a planned power generation output value of the fuel cell device; and

a controller,

wherein the controller makes a first determination for determining, among the plurality of fuel cell units, the number of fuel cell units that generate power and the number of fuel cell units that do not generate power to satisfy the planned power generation output value received via the communicator and makes a second determination for determining the number of the fuel cell units that generate power to satisfy a value obtained by adding the total standby power of the fuel cell units that do not generate power to the planned power generation output value.

6. A power generation planning device for a fuel cell device including a plurality of fuel cell units, comprising:

a communicator that receives a planned power generation output value of the fuel cell device; and
a controller,
wherein the controller makes a first determination for determining the power output of each of the fuel cell units of the fuel cell device to satisfy the planned power generation output value received via the communicator and makes a second determination for determining the power output of each of the fuel cell units of the fuel cell device to satisfy a value obtained by adding the total standby power of the fuel cell units determined to have a power output of 0 to the planned power generation output value.

7. A power generation system comprising:

a fuel cell device including a plurality of fuel cell units; and
the power generation planning device according to claim 5 or 6.

FIG. 1

[AC]

GENERATED
POWER

NET POWER
OUTPUT

STANDBY
POWER

GENERATED
POWER

STANDBY
POWER

GENERATED
POWER

GENERATING
POWER

STANDING
BY

GENERATING
POWER

FIG. 2

[DC]

GENERATED
POWER

GENERATED
POWER

STANDING
BY

GENERATED
POWER

NET POWER
OUTPUT

STANDBY
POWER

GENERATING
POWER

STANDBY
POWER

GENERATING
POWER

FIG. 3

20

10

POWER GENERATION
PLANNING DEVICE

21
COMMUNICATOR

23
CONTROLLER

40
30

FUEL CELL
DEVICE

# FIG. 4

RECEIVE PLANNED POWER GENERATION OUTPUT VALUE OF FUEL CELL DEVICE INCLUDING PLURALITY OF FUEL CELL UNITS ～S1

DETERMINE, AMONG PLURALITY OF FUEL CELL UNITS, NUMBER OF FUEL CELL UNITS THAT GENERATE POWER AND NUMBER OF FUEL CELL UNITS THAT DO NOT GENERATE POWER TO SATISFY PLANNED POWER GENERATION OUTPUT VALUE IN S1 ～S2

DETERMINE NUMBER OF ABOVE-DESCRIBED FUEL CELL UNITS THAT GENERATE POWER TO SATISFY VALUE OBTAINED BY ADDING TOTAL STANDBY POWER OF ABOVE-DESCRIBED FUEL CELL UNITS THAT DO NOT GENERATE POWER TO PLANNED POWER GENERATION OUTPUT VALUE IN S1 ～S3

# FIG. 5

RECEIVE PLANNED POWER GENERATION OUTPUT VALUE OF FUEL CELL DEVICE INCLUDING PLURALITY OF FUEL CELL UNITS — S1

DETERMINE, AMONG PLURALITY OF FUEL CELL UNITS, NUMBER OF FUEL CELL UNITS THAT GENERATE POWER AND NUMBER OF FUEL CELL UNITS THAT DO NOT GENERATE POWER TO SATISFY PLANNED POWER GENERATION OUTPUT VALUE IN S1 — S2

POWER OUTPUT TYPE OF FUEL CELL UNIT? — S4

DC

AC

DETERMINE NUMBER OF ABOVE-DESCRIBED FUEL CELL UNITS THAT GENERATE POWER TO SATISFY VALUE OBTAINED BY ADDING TOTAL STANDBY POWER OF ABOVE-DESCRIBED FUEL CELL UNITS THAT DO NOT GENERATE POWER TO PLANNED POWER GENERATION OUTPUT VALUE IN S1 — S3

# FIG. 6

RECEIVE PLANNED POWER GENERATION
OUTPUT VALUE OF FUEL CELL DEVICE
INCLUDING PLURALITY OF FUEL CELL UNITS ∽S11

DETERMINE POWER OUTPUT OF EACH OF FUEL CELL
UNITS OF FUEL CELL DEVICE TO SATISFY PLANNED
POWER GENERATION OUTPUT VALUE IN S11 ∽S12

DETERMINE POWER OUTPUT OF EACH OF FUEL CELL
UNITS OF FUEL CELL DEVICE TO SATISFY VALUE
OBTAINED BY ADDING TOTAL STANDBY
POWER OF FUEL CELL UNITS DETERMINED TO
HAVE POWER OUTPUT OF 0 TO INDICATED
POWER GENERATION OUTPUT VALUE IN S11 ∽S13

# FIG. 7

RECEIVE PLANNED POWER GENERATION OUTPUT VALUE OF FUEL CELL DEVICE INCLUDING PLURALITY OF FUEL CELL UNITS ~S11

DETERMINE POWER OUTPUT OF EACH OF FUEL CELL UNITS OF FUEL CELL DEVICE TO SATISFY PLANNED POWER GENERATION OUTPUT VALUE IN S11 ~S12

POWER OUTPUT TYPE OF FUEL CELL UNIT? ~S14

DC

AC

DETERMINE POWER OUTPUT OF EACH OF FUEL CELL UNITS OF FUEL CELL DEVICE TO SATISFY VALUE OBTAINED BY ADDING TOTAL STANDBY POWER OF FUEL CELL UNITS DETERMINED TO HAVE POWER OUTPUT OF 0 TO INDICATED POWER GENERATION OUTPUT VALUE IN S11 ~S13

# FIG. 8

POWER GENERATION PLANNING DEVICE 20

10

30A  30B  30C  30D  30E

UTILITY GRID

FUEL CELL UNIT  a1 a2 ... an
FUEL CELL UNIT  b1 b2 ... bn
FUEL CELL UNIT  c1 c2 ... cn
FUEL CELL UNIT  d1 d2 ... dn
FUEL CELL UNIT  e1 e2 ... en

40A  40B  40C  40D  40E

EP 4 787 653 A1

## INTERNATIONAL SEARCH REPORT

| International application No. |
| --- |
| **PCT/JP2024/030919** |

**A.    CLASSIFICATION OF SUBJECT MATTER**

*H02J 3/38*(2006.01)i; *H01M 8/04694*(2016.01)i; *H01M 8/04858*(2016.01)i; *H01M 8/249*(2016.01)i; *H02J 3/00*(2006.01)i
FI:    H02J3/38 170; H01M8/04694; H01M8/04858; H01M8/249; H02J3/00 170

According to International Patent Classification (IPC) or to both national classification and IPC

**B.    FIELDS SEARCHED**

Minimum documentation searched (classification system followed by classification symbols)

H02J3/38; H01M8/04694; H01M8/04858; H01M8/249; H02J3/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2023-47070 A (TOSHIBA ENERGY SYSTEM & SOLUTION CORP.) 05 April 2023 (2023-04-05)<br>    entire text, all drawings | 1-7 |
| A | WO 2022/209687 A1 (PANASONIC INTELLECTUAL PROPERTY MANAGEMENT CO., LTD.) 06 October 2022 (2022-10-06)<br>    entire text, all drawings | 1-7 |
| A | JP 2018-147630 A (BROTHER KOGYO KABUSHIKI KAISHA) 20 September 2018 (2018-09-20)<br>    entire text, all drawings | 1-7 |

☐ Further documents are listed in the continuation of Box C.        ☑ See patent family annex.

| | |
| --- | --- |
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **27 September 2024** | **08 October 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

### INTERNATIONAL SEARCH REPORT
**Information on patent family members**

| | International application No. |
|---|---|
| | **PCT/JP2024/030919** |

| Patent document cited in search report | | | Publication date (day/month/year) | Patent family member(s) | | | Publication date (day/month/year) |
|---|---|---|---|---|---|---|---|
| JP | 2023-47070 | A | 05 April 2023 | US | 2023/0115279 | A1 | |
| | | | | entire text, all drawings | | | |
| | | | | CN | 115863689 | A | |
| | | | | KR | 10-2023-0043680 | A | |
| WO | 2022/209687 | A1 | 06 October 2022 | US | 2023/0411657 | A1 | |
| | | | | entire text, all drawings | | | |
| | | | | EP | 4318692 | A1 | |
| | | | | CN | 117099232 | A | |
| JP | 2018-147630 | A | 20 September 2018 | (Family: none) | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3588855 B